(19) Europäisches Patentamt
European Patent Office
Office européen des brevets

(11) **EP 4 480 907 A1**

(12) **EUROPEAN PATENT APPLICATION**
published in accordance with Art. 153(4) EPC

(43) Date of publication:
**25.12.2024 Bulletin 2024/52**

(51) International Patent Classification (IPC):
**$C01B\ 32/05^{(2017.01)}$** **$C01B\ 32/40^{(2017.01)}$**
**$B01J\ 23/745^{(2006.01)}$**

(21) Application number: **23766644.1**

(22) Date of filing: **28.02.2023**

(52) Cooperative Patent Classification (CPC):
**B01J 23/745; C01B 32/05; C01B 32/40**

(86) International application number:
**PCT/JP2023/007386**

(87) International publication number:
**WO 2023/171466 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2022 JP 2022034548**

(71) Applicants:
• **JFE Steel Corporation
Tokyo 100-0011 (JP)**
• **Tohoku University
Sendai-shi, Miyagi 980-8577 (JP)**

(72) Inventors:
• **IWAMI, Yuji
Tokyo 100-0011 (JP)**
• **HIGUCHI, Takahide
Tokyo 100-0011 (JP)**
• **MURAKAMI, Taichi
Sendai-shi, Miyagi 980-8577 (JP)**

(74) Representative: **Grünecker Patent- und
Rechtsanwälte
PartG mbB
Leopoldstraße 4
80802 München (DE)**

(54) **METHOD AND DEVICE FOR RECOVERING CARBON FROM CARBON-CONTAINING GAS**

(57) An object is to provide a method for recovering carbon from a carbon-containing gas that can recover carbon from a carbon-containing gas containing carbon monoxide, and thus recycle the carbon. The method for recovering carbon from a carbon-containing gas includes a step of bringing a carbon-containing gas containing carbon monoxide into contact with a porous material to cause carbon to be separated from the carbon monoxide, and a step of recovering the carbon, characterized in that water and hydrogen contained in the carbon-containing gas satisfy Expression (1). In Expression (1), $[H_2O]$ represents a water concentration (volume%) in a reformed mixed gas, and $[H_2]$ represents a hydrogen concentration (volume%) in the reformed mixed gas.

Fig. 1

Carbon-containing Gas

CO

Carbon Separating Unit
(Porous Material-Filled Layer at 500 to 800 °C)
$$2\,CO \rightarrow C + CO_2$$
$$CO + H_2 \rightarrow C + H_2O$$

Carbon Recovery Unit
Separated Carbon
Carbon-Metal Solid Solution/Carbon-Metal Compound

## Description

Technical Field

The present invention relates to a method and an apparatus for recovering carbon from a carbon-containing gas containing carbon monoxide. In particular, the present invention relates to a method and an apparatus for recovering, from a carbon-containing gas containing carbon monoxide included in a blast furnace gas, an exhaust gas, or the like discharged in various industries, carbon from the carbon-containing gas.

Background Art

Reducing carbon dioxide emissions is required in all industries, as called for in the SDGs and the Paris Agreement, for example. Examples of a method for reducing carbon dioxide contained in an exhaust gas include either one of a method of replacing an industrial process that generates carbon dioxide with a process that does not involve the use of carbon, or a method of removing carbon from an exhaust gas containing carbon dioxide. As the latter method, typically, a method of removing from an exhaust gas carbon dioxide as is or as a carbon compound (e.g., hydrocarbon) other than carbon dioxide has been the mainstream.

As a technology for reducing carbon dioxide, a technology for producing a carbonate ester by causing a monohydric alcohol and carbon dioxide to react with each other using cerium oxide as a catalyst has been reported (for example, see Patent Literature 1). That is, Patent Literature 1 discloses a method for producing a carbonate ester using a catalytic structure for producing a carbonate ester, and discloses the production of a carbonate ester by a reaction between a monohydric alcohol and carbon dioxide in the presence of the catalytic structure and a hydration agent.

Further, there is disclosed a technology for efficiently removing carbon dioxide from a target gas to be treated that contains carbon dioxide (for example, see Patent Literature 2). That is, Patent Literature 2 discloses a method for separating carbon dioxide as is from a target gas to be treated by bringing the gas into direct contact with an adsorbent in a reaction vessel that is supplied with water and discharges water. The method for separating carbon dioxide from a target gas to be treated described in Patent Literature 2 includes washing the adsorbent, which has its carbon dioxide adsorption capacity decreased by poisoning, with water, thereby washing away a poisoning component (e.g., an acid or a metal salt) attached to the adsorbent so that the adsorbent surface can thus be exposed. This allows the carbon dioxide adsorption capacity of the adsorbent to be recovered.

Citation List

Patent Literature

[0005]

　　Patent Literature 1: International Publication No. 2020/013135
　　Patent Literature 2: International Publication No. 2018/179351

Non Patent Literature

Non Patent Literature 1: Materials Transactions, Vol. 58, No. 12 (2017), pp. 1742 to 1748 "Development of Manufacturing Principle of Porous Iron by Carbothermic Reduction of Composite of Hematite and Biomass Char"

Summary of Invention

Technical Problem

However, the above technologies have the following problems. That is, the technology for reducing carbon dioxide, such as the technology for producing a carbonate ester disclosed in each of Patent Literatures 1 and 2, is intended to separate and remove carbon dioxide as is, or as a carbon compound, but cannot recover carbon itself contained in the carbon dioxide. Meanwhile, a carbon dioxide gas can be reformed into carbon monoxide through a water-gas shift reaction. Therefore, if there is any method that can recover carbon from carbon monoxide, it will be possible to recover carbon from carbon dioxide by combining the reaction with a water-gas shift reaction. However, there has been proposed no method that can recover carbon from carbon monoxide, which is problematic.

The present invention has been made in view of the above circumstances and aims to provide a method and an apparatus for recovering carbon from a carbon-containing gas that can recover carbon contained in a carbon monoxide gas and thus recycle the carbon.

Solution to Problem

A method for recovering carbon from a carbon-containing gas according to the present invention that advantageously solves the above problems includes a step of bringing a carbon-containing gas, which contains carbon monoxide and satisfies Expression (1), into contact with a porous material to cause carbon to be separated from the carbon monoxide, and a step of recovering the carbon.
[Expression 1]

$$[H_2O] \, / \, ([H_2O] + [H_2]) < 0.1 \qquad \cdot \cdot \cdot \quad (1)$$

, where $[H_2O]$ represents a water concentration (volume%) in a reformed mixed gas, and $[H_2]$ represents a hydrogen concentration (volume%) in the reformed mixed gas.
Note that for the method for recovering carbon from a carbon-containing gas according to the present invention, the following can be considered as more preferable solution means, for example.

(a) The carbon-containing gas is brought into contact with the porous material under an atmosphere at 500 to 800°C.
(b) The carbon-containing gas is brought into contact with the porous material under an atmosphere at 1.0 to 10 atm.
(c) An open porosity, as measured by the Archimedes method, of the porous material is 50 to 99%.
(d) The porous material contains at least one element selected from the group consisting of iron, platinum, nickel, cobalt, rhodium, and palladium.
(e) The porous material contains one or two types of iron selected from the group consisting of iron oxide and reduced iron.
(f) The carbon-containing gas contains carbon monoxide produced by a reforming reaction of a source gas containing carbon dioxide in which a mixed gas obtained by supplying a hydrogen gas to the source gas is heated to 800 to 1200°C.
(g) The mixed gas contains a part of or an entirety of an off-gas resulting from the contact between the carbon-containing gas and the porous material.
(h) The hydrogen gas is supplied so that a hydrogen concentration in the mixed gas becomes 58 volume% or more.
(i) Water contained in the source gas and water produced by the reforming reaction of the source gas are removed.

Further, an apparatus for recovering carbon from a carbon-containing gas according to the present invention includes:
(j) a carbon separating unit that brings a carbon-containing gas containing carbon monoxide into contact with a porous material to cause carbon to be separated from the carbon monoxide, and a carbon recovery unit that recovers the carbon.

Advantageous Effects of Invention

According to the present invention, it is possible to recover carbon that forms carbon monoxide contained in a carbon-containing gas, and thus recycle the carbon. Further, according to the present invention, it is possible to recover carbon from carbon dioxide by using a gas obtained by reforming carbon dioxide contained in an exhaust gas, a blast furnace gas, or the like into carbon monoxide through a reaction combined with a water-gas shift reaction.

Brief Description of Drawings

Fig. 1 is a schematic view of a process example of a method for recovering carbon according to the present embodiment.
Fig. 2 is an overview of a carbon separating unit in a carbon recovery apparatus adopted to implement the method for recovering carbon according to the present embodiment in which Fig. 2(a) is a schematic view of the carbon separating unit, and Fig. 2(b) is an enlarged photograph of an exemplary configuration of a porous material in the carbon separating unit.
Fig. 3 is a schematic view of another example of a process of the method for recovering carbon according to the present embodiment.

Fig. 4 is a graph showing the proportion (volume%) of hydrogen added to an exhaust gas used in the method for recovering carbon according to the present embodiment, and the composition of the gas reformed at 800°C and dehydrated.

Fig. 5 is a graph showing the relationship between the passage of time (min) and the temperature (°C) in a gas reforming furnace adopted to perform the method for recovering carbon according to the present embodiment.

Fig. 6 is a graph showing the relationship between the passage time (min) of a carbon-containing gas and the mass increase rate $\Delta W$ (mass%) of a porous material when the method for recovering carbon according to the present embodiment is performed.

Fig. 7 is a photograph of the state of iron whiskers formed in a tablet shape before and after a carbon-containing gas was passed therethrough when the method for recovering carbon according to the present embodiment was performed, in which Fig. 7(a) is a photograph of the state of the iron whiskers before the carbon-containing gas was passed therethrough, and Fig. 7(b) is a photograph of the state of the iron whiskers after the carbon-containing gas was passed therethrough.

Fig. 8 is an enlarged photograph of the state of iron whiskers taken with a scanning electron microscope (SEM) after the carbon-containing gas was passed therethrough.

Fig. 9 shows an XRD profile of iron whiskers after the carbon-containing gas was passed therethrough.

Description of Embodiments

Hereinafter, a method for recovering carbon from a carbon-containing gas according to the present embodiment will be described with reference to the drawings. The drawings are only schematic, and thus may differ from the actual ones. In addition, the following embodiments only illustrate examples of an apparatus and a method for embodying the technical idea of the present invention. Thus, the configuration of the present invention is not limited thereto. That is, the technical idea of the present invention can be changed in various ways within the technical scope recited in the claims.

[First Embodiment]

A method for recovering carbon from a carbon-containing gas according to a first embodiment will be described. The method for recovering carbon from a carbon-containing gas according to the present embodiment includes a step of bringing a carbon-containing gas containing carbon monoxide into contact with a porous material to cause carbon to be separated from the carbon monoxide, and a step of recovering the carbon.

Hereinafter, each step of the method for recovering carbon from a carbon-containing gas according to the present embodiment will be described.

<Step of bringing carbon-containing gas into contact with porous material to cause carbon to be separated from carbon monoxide>

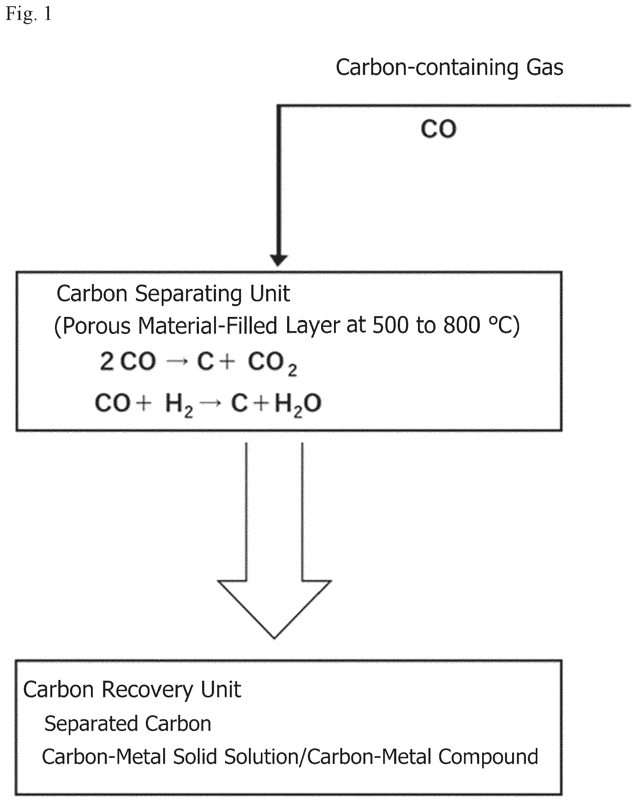

Fig. 1 is a schematic view of an example of a process of a carbon recovery method for recovering solid-state carbon from a carbon-containing gas according to the present embodiment. It is acceptable as long as the carbon-containing gas contains carbon monoxide as a raw material of carbon to be recovered, and the carbon-containing gas may also contain carbon dioxide, hydrogen, water, and so on in addition to the carbon monoxide. It should be noted that the water and hydrogen contained in the carbon-containing gas need to satisfy the following Expression (1). The carbon-containing gas used for the carbon recovery method for recovering solid-state carbon from a carbon-containing gas of the present embodiment may be an exhaust gas or a gas generated in the existing production process, such as a blast furnace gas. Therefore, the carbon-containing gas contains carbon monoxide, carbon dioxide, hydrogen, and water in many cases.

[Expression 2]

$$[H_2O] \, / \, ([H_2O] + [H_2]) < 0.1 \qquad \cdot \cdot \cdot \quad (1)$$

, where $[H_2O]$ represents a water concentration (volume%) in a reformed gas, and $[H_2]$ represents a hydrogen concentration (volume%) in the reformed gas.

The carbon monoxide contained in the carbon-containing gas becomes a raw material of carbon to be recovered. The carbon that forms the carbon monoxide contained in the carbon-containing gas is separated from the carbon monoxide by a bimolecular decomposition reaction (I) that occurs with the decomposition of two carbon monoxide molecules represented by the following Chemical Equation (I), or by a monomolecular decomposition reaction (II) that occurs with a reaction between one carbon monoxide molecule and hydrogen represented by the following Chemical Equation (II).
[Formula 1]

$$2CO \ \rightarrow C + CO_2 \qquad \cdot \ \cdot \ \cdot \quad (I)$$

[Formula 2]

$$CO \ + \ H_2 \ \rightarrow C + H_2O \qquad \cdot \ \cdot \ \cdot \quad (II)$$

Regarding the carbon monoxide contained in the carbon-containing gas, CO/(CO + CO$_2$) is preferably 0.5 or more, and is more preferably 0.7 or more. Accordingly, solid-state carbon can be efficiently recovered from the carbon monoxide. The carbon-containing gas may be prepared by supplying gas components, such as carbon monoxide, carbon dioxide, and hydrogen, from vessels filled with the respective gas components so that they attain their predetermined volume percent.

The carbon-containing gas may be a blast furnace gas discharged from an iron-making blast furnace, or an exhaust gas discharged from an automobile, a gas turbine, an incinerator, a thermal power plant, or a factory as long as the carbon-containing gas contains a predetermined amount of carbon monoxide. Alternatively, the carbon-containing gas may be a gas obtained by using a blast furnace gas or an exhaust gas as a raw material, and adding thereto deficient gas components to adjust the amounts of carbon monoxide and carbon dioxide so that they attain the above volume percent. As a further alternative, the carbon-containing gas may be a gas obtained by using a blast furnace gas or an exhaust gas as a raw material, and chemically treating the gas to adjust the amounts of carbon monoxide and carbon dioxide so that they attain the above volume percent.

For example, a blast furnace gas contains 21 to 23 volume% carbon monoxide, 19 to 22 volume% carbon dioxide, 2 to 3 volume% hydrogen, and 53 to 56 volume% nitrogen and can be directly used as the carbon-containing gas. Note that such a blast furnace gas is generated as coke, heavy oil, and pulverized coal, which have been fed into a blast furnace, are partially combusted with air to produce a reducing gas that is composed mainly of carbon monoxide and nitrogen, and then iron ores are reduced with the reducing gas. Therefore, by appropriately setting the combustion conditions for coke and so on in the blast furnace, the volume percent of each gas component in the blast furnace gas can be adjusted. In addition, by appropriately setting the combustion conditions for a fuel as a raw material of the exhaust gas, the volume percent of each gas component in the exhaust gas can be adjusted.

Bringing the carbon-containing gas into contact with the porous material and separating carbon from the carbon monoxide contained in the carbon-containing gas are performed within a carbon separating unit of a carbon recovery apparatus adopted to implement the method for recovering carbon according to the present embodiment. A filled layer filled with the porous material is provided in the carbon separating unit.

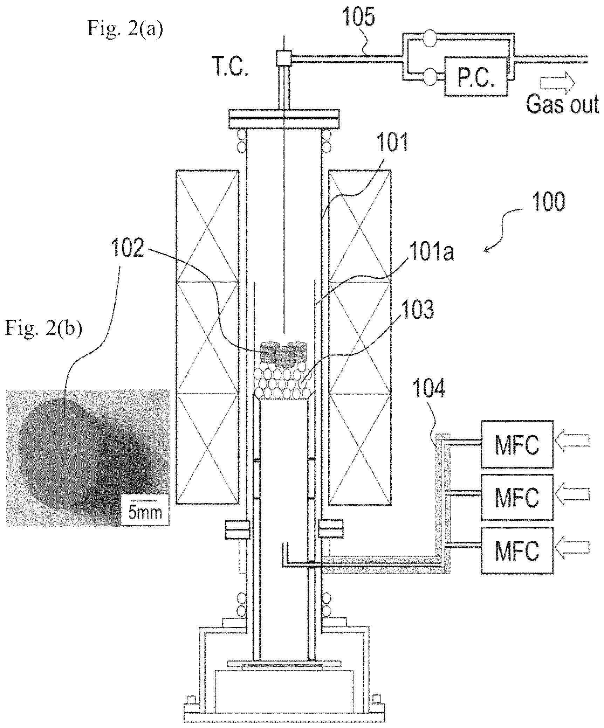

Fig. 2 is a schematic view showing an overview of a carbon separating unit provided in a carbon recovery apparatus adopted to implement the method for recovering carbon according to the present embodiment. As shown in Fig. 2, a reaction tower 101 provided in a carbon separating unit 100 in the carbon recovery apparatus is filled with a porous material 102. The porous material 102 is held by a sample holder 101a provided within the reaction tower 101. The configuration of the porous material 102 is not limited to a particular one as long as it allows a decomposition reaction of the carbon monoxide contained in the carbon-containing gas to proceed as the carbon-containing gas passes through the porous material 102. The configuration of the porous material 102 may be a porous material formed into a tablet shape as shown in Fig. 2(b), a porous material formed into a honeycomb structure, or a porous material formed into a flush structure, for example. Further, the porous material may be formed into a layered compact. Alternatively, a plurality of layered compacts may be disposed as the porous material 102 in the reaction tower 101. Note that a buffer layer 103 formed of a granular material of oxide, such as aluminum oxide, may be provided below the porous material.

A carbon-containing gas containing carbon monoxide is supplied from a lower portion of the reaction tower 101 provided in the carbon separating unit 100. The carbon-containing gas supplied to the reaction tower 101 comes into contact with the porous material 102 provided within the reaction tower 101 as it passes through the porous material 102. The contact between the carbon monoxide contained in the carbon-containing gas and the porous material 102 is preferably effected under an atmosphere of a predetermined temperature and a predetermined pressure in the carbon separating unit 100. Therefore, the carbon separating unit 100 may include a temperature control device, such as a heater, for setting the internal space of the carbon separating unit 100 to be in a predetermined temperature range. The carbon-containing gas containing carbon monoxide is supplied from a supply pipe 104 disposed in the lower portion of the reaction tower 101. An off-gas resulting from the contact between the carbon-containing gas containing carbon monoxide and the porous material 102 is discharged through an exhaust gas pipe 105.

Carbon that forms the carbon monoxide contained in the carbon-containing gas is separated from the carbon monoxide in the carbon separating unit 100. Carbon that forms the carbon monoxide contained in the carbon-containing gas is separated from the carbon monoxide by a bimolecular decomposition reaction (I) of the carbon monoxide represented by the following Chemical Equation (I), or by a monomolecular decomposition reaction (III) of the carbon monoxide represented by the following Chemical Equation (II). The carbon separated from the carbon monoxide is adsorbed on the surface of the porous material 102, or causes carburizing within the porous material 102.

[Formula 3]

$$2CO \rightarrow C + CO_2 \cdots \qquad (I)$$

[Formula 4]

$$CO + H_2 \rightarrow C + H_2O \cdots \qquad (II)$$

The contact between the carbon-containing gas and the porous material 102 is preferably effected under an atmosphere in the temperature range of 500 to 800°C. When the temperature at which the carbon-containing gas is brought into contact with the porous material 102 is 500°C or higher, a decomposition reaction of the carbon monoxide is promoted, which is preferable, while when the temperature is 800°C or lower, the thermal energy generated by a decomposition reaction of the carbon monoxide can be effectively utilized, which is preferable. The range of the temperature at which the carbon-containing gas is brought into contact with the porous material 102 includes 500 to 800°C that corresponds to the temperature condition adopted for direct-reduction ironmaking performed by using iron as the porous material 102, for example. The contact between the carbon-containing gas and the porous material 102 may be effected by passing the carbon-containing gas through the layer filled with the porous material 102 provided in the carbon separating unit 100. This allows decomposition reactions of the carbon monoxide represented by Chemical Equations (I) and (II) to proceed. As the decomposition reactions of the carbon monoxide proceed, carbon is separated from the carbon monoxide. The carbon separated from the carbon monoxide is precipitated on the surface of the porous material 102. In addition, the carbon separated from the carbon monoxide causes carburizing within the porous material 102, and then forms a carbon-metal solid solution or a metal carbide compound with the porous material 102 within the porous material 102.

The contact between the carbon-containing gas and the porous material 102 is preferably effected under an atmosphere at 1.0 to 10 atm. The pressure of 1.0 atm or more at which the carbon-containing gas is brought into contact with the porous material 102 corresponds to the pressurization condition, and allows the chemical equilibriums of the decomposition reactions of the carbon monoxide represented by Chemical Equations (I) and (II) to shift in the direction in which carbon is separated, thus promoting the decomposition reactions of the carbon monoxide, which is preferable. Meanwhile, the pressure of 10 atm or less at which the carbon-containing gas is brought into contact with the porous material 102 can ensure the safety when the carbon separating unit 100 is operated in terms of the legal restraints, which is preferable.

The porous material 102, with which the carbon-containing gas containing carbon monoxide is brought into contact, preferably has an open porosity of 50% to 99%, more preferably 80% or more. The open porosity is measured by the Archimedes method. When the open porosity of the porous material 102 is 50% or more, the carbon-containing gas containing carbon monoxide passes through the pores of the porous material 102, and a decomposition reaction of the carbon monoxide is promoted, and thus, carbon can be separated from the carbon monoxide, which is preferable. The carbon separated from the carbon monoxide is adsorbed in the pores of the porous material 102. Meanwhile, when the open porosity of the porous material 102 is 99% or less, the thermal shock resistance to the carbon-containing gas containing carbon monoxide supplied to the porous material 102 can be maintained, which is preferable. The pore diameter of the porous material 102 is preferably 10 $\mu$m or more. Note that the open porosity of the porous material is measured by the Archimedes method. Specifically, a value measured by a measurement method defined by the Japanese Industrial Standards (JIS R2205; 1992) can be used as the open porosity of the porous material 102.

The porous material 102 with which the carbon-containing gas containing carbon monoxide is brought into contact preferably contains at least one element selected from the group consisting of iron, platinum, nickel, cobalt, rhodium, and palladium. That is, the porous material 102 may contain one metal element selected from the group consisting of iron, platinum, nickel, cobalt, rhodium, and palladium, or a combination of two or more of such metal elements. Further, the porous material 102 may be a metal compound containing one metal element selected from the group consisting of iron, platinum, nickel, cobalt, rhodium, and palladium as carbide, oxide, carbonate, sulfate, oxalate, or the like.

Among such metals adopted as the porous material 102 with which the carbon-containing gas containing carbon monoxide is brought into contact, iron, platinum, and nickel are preferable. When platinum or nickel is used as the porous material 102, the platinum or the nickel functions as a decomposition reaction catalyst for the carbon monoxide, and the decomposition reaction catalyst would undergo little deterioration, which is preferable. In addition, when platinum or nickel is used as the porous material 102, solid-state carbon is precipitated as graphite alone by a decomposition reaction of the carbon monoxide, which is preferable.

The porous material 102 with which the carbon-containing gas containing carbon monoxide is brought into contact is more preferably iron. The use of iron as the porous material 102 causes the porous material 102 to be carburized by carbon generated by the decomposition reaction of the carbon monoxide to thus obtain austenite (i.e., γ iron) with the carbon being dissolved as a solid-solution, which is preferable. The use of iron as the porous material 102 also causes the porous material 102 to be carburized by carbon separated from the carbon monoxide by the decomposition reaction of the carbon monoxide and to be reacted with the iron, obtaining cementite (iron carbide) which is preferable. Austenite and cementite resulting from the carburizing of the porous material 102, which is iron, by carbon separated from the carbon monoxide by the decomposition reaction of carbon monoxide have almost the same hardness as quenching steel and thus can be directly used as iron-making raw materials. Further, the porous material 102 with which the carbon-containing gas is brought into contact is preferably one or two types of iron selected from the group consisting of iron oxide and reduced iron.

The porous material 102 with which the carbon-containing gas containing carbon monoxide is brought into contact is particularly preferably an iron whisker. An iron whisker is a metallic crystal that grows on the surface of a crystal in an outward direction like a beard and is formed such that, when compression stress is generated around the surface of a crystal, a new crystal is grown on the original crystal in an outward direction in an attempt to relax the stress. Since such an iron whisker has a small start point of crystal growth and tends to keep growing continuously, it is formed as a single crystal in the shape of an extremely long and thin beard and has a length of 10 μm or more relative to a diameter of about 1 μm. When an iron whisker is adopted as the porous material 102 with which the carbon-containing gas containing carbon monoxide is brought into contact, it is possible to allow the iron whisker to be carburized by the carbon separated from the carbon monoxide by a decomposition reaction of the carbon monoxide, thereby obtaining an iron whisker formed of austenite (i.e., γ iron) or an iron whisker formed of cementite (i.e., iron carbide).

The iron whisker as the porous material 102 with which the carbon-containing gas containing carbon monoxide is brought into contact can be produced by a method of producing an iron whisker described in Non Patent Literature 1, for example. According to the method of producing an iron whisker, it is possible to obtain an iron whisker as the porous material 102 with an open porosity of 90% or more and a pore diameter of 10 μm or more. The iron whisker obtained by the method of producing an iron whisker also has a high open porosity and thus can be preferably used as the porous material 102 used for the method for recovering carbon from a carbon-containing gas of the present embodiment. It should be noted that even when a metal other than iron, such as platinum, is used as the metal for forming the porous material 102 with which the carbon-containing gas is brought into contact, the porous material 102 can be produced in the same manner.

<Step of recovering carbon>

The method for recovering carbon from a carbon-containing gas according to the present embodiment includes a step of recovering carbon separated from carbon monoxide. The step of recovering carbon is performed in a carbon recovery unit, for example. Herein, "recovering carbon" includes recovering carbon that has been separated from carbon monoxide and precipitated on the surface of the porous material 102 or on the inner surfaces of the pores of the porous material 102. Further, "recovering carbon" includes recovering carbon that has been separated from carbon monoxide to cause carburizing in the porous material 102 and has reacted with the metal element contained in the porous material 102 to form a carbon-metal solid solution or a metal carbide compound.

The carbon obtained by a decomposition reaction of the carbon monoxide contained in the carbon-containing gas is precipitated on the surface of the porous material 102 or on the inner surfaces of the pores of the porous material 102. The carbon obtained by a decomposition reaction of the carbon monoxide contained in the carbon-containing gas also causes carburizing within the porous material 102 and reacts with the metal element forming the porous material 102, thereby forming a carbon solid solution or a metal carbide compound. Further, the carbon obtained by a decomposition reaction of the carbon monoxide contained in the carbon-containing gas is precipitated on the surface of the carbon solid solution or the metal carbide compound.

The step of recovering carbon can be performed using the carbon recovery unit of the carbon recovery apparatus adopted to implement the method for recovering carbon according to the present embodiment. The carbon recovery unit recovers carbon separated from the carbon monoxide and precipitated on the surface of the porous material 102. The carbon recovery unit may include, for example, a sieve mesh for separating the separated solid-state carbon from the porous material 102. The carbon, carbon-metal solid solution, or metal carbide compound separated by the sieve mesh, for example, is recovered by the carbon recovery unit.

The solid-state carbon separated from the carbon monoxide can be recovered by an operation for separating powder and granular materials with the carbon recovery unit having the mesh sieve, for example. In addition, when the separated carbon forms a carbon-metal solid solution or a metal carbide compound by reacting with the metal element forming the porous material 102 after carburizing within the porous material 102, the carbon can be recovered by recovering the carbon-metal solid solution or the metal carbide compound as is. Note that when the recovered carbon is to be used as an iron-making raw material, using iron as the porous material 102 can, without performing an operation of separating the recovered carbon from the porous material 102, collectively use them as the iron-making raw material, which is more preferable.

As described above, in the method for recovering carbon from a carbon-containing gas according to the present embodiment, bringing a carbon-containing gas containing carbon monoxide into contact with the porous material 102 can promote a decomposition reaction of the carbon monoxide to separate carbon, and recover the carbon as separated solid-state carbon, or as a carbon-metal solid solution or a metal carbide compound containing the carbon. Further, as the carbon recovery apparatus used for the method for recovering carbon from a carbon-containing gas according to the present embodiment includes the carbon separating unit 100 and the carbon recovery unit, it is possible to recover carbon as solid-state carbon separated from carbon monoxide, or as a carbon solid solution or a metal carbide compound containing the carbon.

The carbon recovered by the method for recovering carbon from a carbon-containing gas according to the present embodiment can be utilized as, for example, a source of energy for power generation and so on, an auxiliary material fed into a converter for thermal compensation for molten iron, or an iron-making raw material before quenching is performed. That is, the method for recovering carbon from a carbon-containing gas according to the present embodiment allows, by using carbon recovered from a carbon-containing gas containing carbon monoxide, the carbon to be effectively utilized as a recycled resource.

As described above, according to the method for recovering carbon from a carbon-containing gas according to the present embodiment, it is possible to recover carbon that forms a carbon monoxide gas contained in a carbon-containing gas as solid-state carbon, and thus recycle the carbon.


[Second Embodiment]


A method for recovering carbon from a carbon-containing gas according to a second embodiment will be described. The method for recovering carbon from a carbon-containing gas according to the present embodiment is characterized in that, in the method for recovering carbon according to the above embodiment, the carbon-containing gas contains carbon monoxide generated by a reforming reaction of a source gas containing carbon dioxide that is effected by heating a mixed gas obtained by supplying hydrogen to the source gas to 800 to 1200°C. That is, each step included in the method for recovering carbon from a carbon-containing gas according to the present embodiment is identical to each step included in the method for recovering carbon according to the first embodiment, except that a carbon-containing gas containing carbon monoxide is prepared from a mixed gas that includes as a raw material a source gas containing carbon dioxide. Therefore, the detailed description of the steps included in the method for recovering carbon from a carbon-containing gas according to the present embodiment that are identical to the steps included in the method for recovering carbon according to the first embodiment will be omitted. Hereinafter, characteristic steps included in the method for recovering carbon from a carbon-containing gas according to the present embodiment will be described.

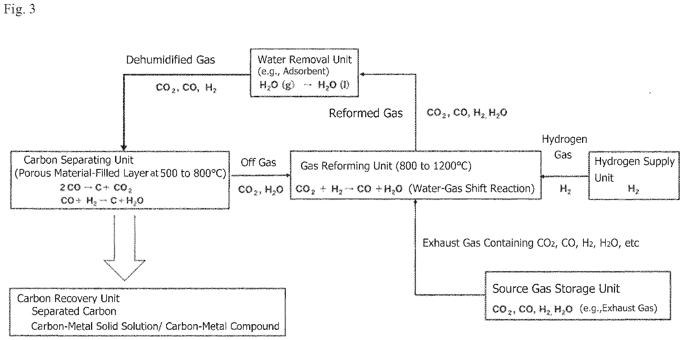

Fig. 3 is a schematic view showing an example of a process of the method for recovering carbon from a carbon-containing gas according to the present embodiment. As shown in Fig. 3, a carbon-containing gas containing carbon monoxide is produced by reforming a mixed gas, which has been obtained by using a source gas such as a blast furnace gas and an exhaust gas and adding a hydrogen gas to the source gas as well as carbon dioxide and water vapor as an off-gas generated in the carbon separating unit 100, by a water-gas shift reaction, and then removing the water contained in the reformed gas. The carbon recovery apparatus for performing the method for recovering carbon from a carbon-containing gas according to the present embodiment may include a source gas storage unit, a gas reforming unit, a hydrogen supply unit, and a water removal unit, for example, in addition to the above carbon recovery apparatus.

The source gas containing carbon dioxide and carbon monoxide is passed through the gas reforming unit such as a gas reforming furnace. Note that the source gas is stored in the source gas storage unit. Examples of the source gas containing carbon dioxide and carbon monoxide include a blast furnace gas and an exhaust gas.

The source gas storage unit stores the source gas, such as a blast furnace gas or an exhaust gas, supplied thereto from the outside. Specifically, the source gas is a blast furnace gas discharged from an iron-making blast furnace, or an exhaust gas discharged from an automobile, gas turbine, incinerator, thermal power plant, or factory, and contains hydrogen, water, nitrogen oxide, and sulfur oxide, for example, in addition to carbon monoxide and carbon dioxide. Therefore, the source gas storage unit is preferably a vessel that is made of a material capable of storing the source gas and is excellent in heat resistance and pressure resistance. The source gas storage unit is connected to the gas reforming unit by a source gas supply pipe. The source gas is supplied to the gas reforming unit through the source gas supply pipe.

Next, a hydrogen gas supplied from the hydrogen supply unit is added to the gas reforming unit to produce a mixed gas. Further, the mixed gas may contain a part of or the entirety of an off-gas that results from the contact between the carbon-containing gas and the porous material 102 in the method for recovering carbon from a carbon-containing gas according to the first embodiment. The off-gas is an exhaust gas resulting from the contact between the carbon-containing gas containing carbon monoxide and the porous material 102. Since the off-gas contains carbon dioxide, including the off-gas in the mixed gas can increase the amount of carbon dioxide contained in the mixed gas. After that, an internal space of the gas reforming unit filled with the mixed gas is heated to 800 to 1200°C. When the internal space of the gas reforming unit is heated to a temperature in such a range, the carbon dioxide in the mixed gas that is present within the gas reforming unit undergoes a water-gas shift reaction with hydrogen in accordance with the following Chemical Equation (III), thereby generating carbon monoxide and water.

[Formula 5]

$$CO_2 + H_2 \rightarrow CO + H_2O \cdots \qquad (III)$$

A water-gas shift reaction between carbon dioxide and hydrogen is reversible. In a region where the reaction temperature is over 500°C, the chemical equilibrium of the water-gas shift reaction shifts in the direction in which carbon monoxide is generated. Thus, in the method for recovering carbon from a carbon-containing gas of the present embodiment, setting the temperature in the gas reforming unit to 800 to 1200°C can efficiently convert carbon dioxide into carbon monoxide, and thus can produce carbon monoxide in a larger amount as a raw material of carbon to be separated. That is, in the method for separating carbon from a carbon-containing gas of the present embodiment, setting the temperature in the gas reforming unit to 800 to 1200°C can efficiently reform carbon dioxide into carbon monoxide.

A water-gas shift reaction that proceeds in the gas reforming unit is a reaction between a carbon monoxide gas in the mixed gas, which contains the source gas and the hydrogen gas supplied from the hydrogen supply unit, and hydrogen. Herein, it is preferable to supply hydrogen so that the hydrogen concentration in the mixed gas becomes 58 volume% or more. When the hydrogen concentration in the mixed gas is 58 volume% or more, it is possible to increase the proportion of a carbon monoxide gas in a water-gas shift reaction and also to recover carbon separated from carbon monoxide in the following step of separating carbon from carbon monoxide, which is preferable. The condition of the hydrogen concentration of 58 volume% or more in the mixed gas corresponds to the condition under which the amount of carbon monoxide would increase by a water-gas shift reaction in the temperature range of 800 to 1200°C. Such a condition is derived from the relationship between the temperature of the water-gas shift reaction and an equilibrium constant. The upper limit of the hydrogen concentration in the mixed gas may be less than 100 volume% and may be determined in accordance with the carbon dioxide concentration. In addition, it is preferable to use hydrogen derived from a non-fossil fuel as hydrogen of the hydrogen gas supplied from the hydrogen supply unit disposed outside of the gas reforming unit. This can further reduce carbon dioxide emissions, and thus is preferable. Note that the amount of the hydrogen gas supplied from the hydrogen supply unit can be set by taking into consideration the amount of hydrogen contained in the source gas, such as a blast furnace gas or an exhaust gas.

As described above, a water-gas shift reaction of the mixed gas, which contains the source gas supplied from the source gas supply unit, the hydrogen gas supplied from the hydrogen supply unit, and the off-gas supplied from the carbon separating unit, is performed within the gas reforming unit. Therefore, the gas reforming unit is preferably a vessel with a size, heat resistance, and pressure resistance that are sufficient to allow a water-gas shift reaction of the foregoing mixed gas to occur.

It is acceptable as long as the hydrogen supply unit is able to supply a hydrogen gas to the gas reforming unit under a predetermined condition. When the hydrogen supply unit supplies hydrogen using a method of storing hydrogen in a gas state at high pressure, the hydrogen supply unit is formed of special stainless steel, an aluminum alloy, or a polymer composite material, for example. Alternatively, when the hydrogen supply unit supplies hydrogen using a method of storing hydrogen in a liquid state, the hydrogen supply unit is preferably a vessel having a double-wall structure including a vacuum area. Further, when the hydrogen supply unit supplies hydrogen using a method of storing hydrogen in a metal, it is preferable to use a hydrogen-storing alloy.

The mixed gas is reformed into a reformed gas by a water-gas shift reaction. The reformed gas is supplied to the water removal unit. The reformed gas contains water contained in the source gas and water produced by the reforming reaction. Therefore, the water contained in the reformed gas resulting from the water-gas shift reaction is removed while passing through the water removal unit. The removal of the water herein can be effected by a method of passing the mixed gas through a layer filled with an adsorbent provided in the water removal unit, or a method of passing the mixed gas through a separating film, for example. In the reformed gas present in the gas reforming furnace after the water-gas shift reaction, the water contained in the source gas and the water generated by the reforming reaction need to be removed therefrom so as to satisfy the following Expression (1).

[Expression 3]

$$[H_2O] / ([H_2O] + [H_2]) < 0.1 \cdots \qquad (1)$$

, where [$H_2O$] represents the water concentration (volume%) in the reformed gas, and [$H_2$] represents the hydrogen concentration (volume%) in the reformed gas.

By setting the water concentration in the reformed gas to satisfy Expression (1) above, the carbon recovery efficiency in the carbon recovery step is increased, which is preferable. In this manner, such a dehumidified gas with the water removed therefrom is supplied to the carbon separating unit 100 as a carbon-containing gas containing carbon monoxide.

As described above, in the method for recovering carbon from a carbon-containing gas according to the second embodiment, a carbon-containing gas containing carbon monoxide is prepared by using a source gas, such as a blast furnace gas or an exhaust gas, as a raw material, supplying hydrogen to the source gas to convert carbon dioxide into carbon monoxide by a reaction combined with a water-gas shift reaction, and further removing water from the gas. In addition, with the method for recovering carbon from a carbon-containing gas according to the second embodiment, a carbon-containing gas containing carbon monoxide is brought into contact with a porous material so that a decomposition reaction of the carbon monoxide is allowed to proceed, and thus, carbon can be separated from the carbon monoxide, and can be recovered as separated solid-state carbon, or as a carbon solid solution or a metal carbide compound containing the carbon. Note that each of the source gas, the mixed gas, and the dehumidified gas of the second embodiment contains carbon monoxide. Thus, such a gas is a carbon-containing gas containing carbon monoxide.

As described above, with the method for recovering carbon from a carbon-containing gas according to the second embodiment, it is possible to use a gas obtained by reforming carbon dioxide contained in a source gas, such as a blast furnace gas or an exhaust gas, into carbon monoxide through a reaction combined with a water-gas shift reaction, and recover carbon from the carbon dioxide contained in the source gas. Note that the method for recovering carbon from a carbon-containing gas according to the present embodiment can use as the source gas not only a blast furnace gas discharged from an iron-making blast furnace but also an exhaust gas discharged from an automobile, a gas turbine, an incinerator, a thermal power plant, or a factory. Thus, the method for recovering carbon has quite a wide range of applications, and the technical value of the method is also high from the perspective of reducing carbon dioxide.

[Other Embodiments]

Although the present invention has been described with reference to the embodiments, the present invention is not limited thereto. The configuration and the details of the invention of the present application can be modified in various ways within the technical scope of the invention of the present application to such an extent that one of ordinary skill in the art can understand.

Example

<Preparation of carbon-containing gas>

Regarding the method for recovering carbon from a carbon-containing gas according to the present invention, an example in which carbon is recovered by using an exhaust gas as a source gas will be described. In this example, an exhaust gas with the ingredient composition of gas components shown in Table 1 below was used as the source gas, and was supplied to the gas reforming furnace. Table 1 shows the components (volume%) of the exhaust gas.

Table 1

| Exhaust Gas Components | Carbon Monoxide | Carbon dioxide | Hydrogen | Water |
|---|---|---|---|---|
| Composition (volume %) | 42.0 | 43.8 | 8.0 | 6.2 |

Mixed gases to be subjected to water-gas shift reactions were prepared by supplying different concentrations of hydrogen from outside the gas reforming furnace in which the exhaust gas was present. Herein, the concentrations of hydrogen supplied to the exhaust gas from the outside of the gas reforming furnace were set to 25 volume%, 50 volume%, 75 volume%, and 100 volume%. After each mixed gas was prepared, the mixed gas was heated to 800°C to be reformed through a water-gas shift reaction. Note that the water-gas shift reaction of the mixed gas is represented by the following Chemical Equation (III).

[Formula 6]

$$CO_2 + H_2 \rightarrow CO + H_2O \cdots \qquad (III)$$

Further, water generated in the gas reforming furnace after the water-gas shift reaction of the mixed gas was removed. The water generated in the gas reforming furnace was removed using an adsorbent or a hydrogen separating film. The water generated in the gas reforming furnace after the water-gas shift reaction is water vapor. The water vapor generated in the gas reforming furnace is conveyed to the water removal unit together with carbon monoxide, carbon dioxide, and hydrogen that are present in the gas reforming furnace. The water vapor conveyed to the water removal unit is cooled to a liquid state in the water removal unit.

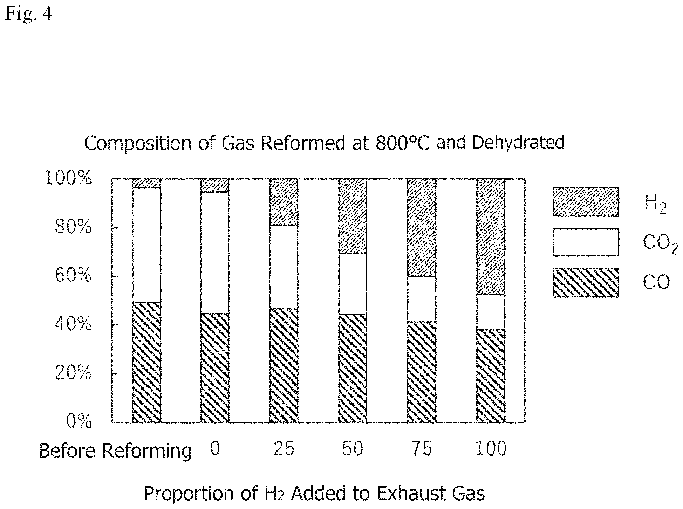

Fig. 4 shows the ingredient composition of the dehumidified gas with the water removed therefrom after the water-gas shift reaction of the mixed gas. Fig. 4 also shows that even when the concentration of hydrogen supplied to the gas reforming furnace is increased, the concentration of carbon monoxide present in the gas reforming unit does not change and is almost constant. That is, according to Fig. 4, it is understood that when hydrogen is supplied to the gas reforming unit, the concentration of carbon monoxide hardly changes, but the concentration of carbon dioxide decreases. Meanwhile, when hydrogen is supplied to the gas reforming unit, the total amount of the gas present in the gas reforming unit is increased. Thus, it has been clarified that the reforming of carbon dioxide into carbon monoxide by a conversion reaction has proceeded favorably.

<Passage of carbon-containing gas through porous material>

The dehumidified gas was passed through the porous material to separate carbon from the carbon monoxide contained in the dehumidified gas, so that the carbon forming the carbon monoxide was thus precipitated.

The carbon separating unit used in the Example includes a tubular reaction tower in which the carbonization reaction of the carbon monoxide contained in the carbon-containing gas occurs, a supply pipe for supplying the carbon-containing gas from a lower portion of the reaction tower, a layer of the porous material provided in the reaction tower, and a supply pipe for discharging the gas generated after the carbonization reaction. The inside diameter of the tubular reaction tower was set to 53 mm. As the porous material in the carbonization facility, a plurality of porous materials each obtained by forming iron whiskers having a mass of 9.3 g and an open porosity of 97.7% in tablet form were used. The porous material is placed on a layer of granular alumina balls (with a particle size of 10 mm). Note that the porous material was produced in accordance with the method of producing an iron whisker described in Non Patent Literature 1.

The carbon-containing gas containing nitrogen, carbon monoxide, and hydrogen was supplied from the lower portion of the reaction tower in the carbon separating unit through the supply pipe. Carbon was separated from the carbon monoxide by supplying a predetermined gas while controlling the temperature in the carbonization facility.

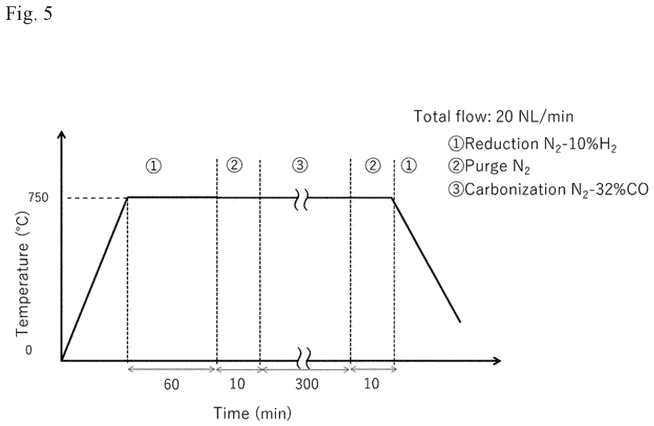

As shown in Fig. 5, the temperature in the carbon separating unit was heated to 750°C, and then, (1) nitrogen and 10 volume% of hydrogen were supplied for 60 minutes. Further, (2) nitrogen was supplied for 10 minutes to replace the gas in the carbon separating unit with an inert atmosphere. After that, (3) nitrogen and 32 volume% of carbon monoxide were supplied for 300 minutes. After nitrogen and 32 volume% of carbon monoxide were supplied, nitrogen was supplied for 10 minutes to replace the gas in the carbon separating unit with an inert atmosphere. Then, the temperature in the carbonization facility was lowered from 750°C to room temperature. Note that pressure in the carbon separating unit was held at 3.0 atm.

<Recovery of separated carbon>

The carbon separated from the carbon monoxide was recovered as the carbon-containing gas was passed through the porous material. The recovered carbon corresponds to solid-state carbon in powder form precipitated on the surface of the porous material formed in tablet form, and a carbon solid solution or a metal carbide compound formed in the porous material. Therefore, it is possible to, by comparing the mass of the porous material before the carbon-containing gas is passed therethrough with the mass of the porous material after the carbon-containing gas is passed therethrough, evaluate the mass increase rate $\Delta W$ (mass%) of the porous material before and after the carbon-containing gas is passed therethrough as the recovery rate of carbon separated from the carbon monoxide contained in the exhaust gas or the like.

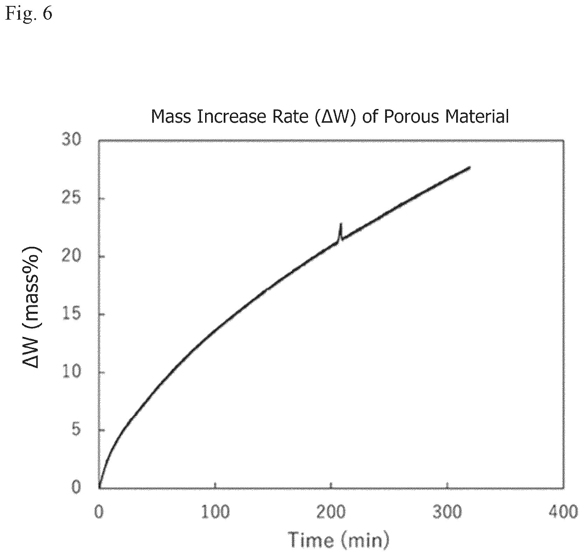

Fig. 6 is a graph showing the relationship between the time (min) for which the carbon-containing gas is passed through the porous material and the mass increase rate $\Delta W$ (mass%) of the porous material. As shown in Fig. 6, the mass increase rate $\Delta W$ (mass%) of the porous material increases with the time (min) for which the carbon-containing gas is passed through the porous material. That is, it has been found that a decomposition reaction of carbon monoxide proceeds with the passage of time (min) for which the carbon-containing gas is passed through the porous material, and thus, carbon separated from the carbon monoxide is precipitated, or a carbon-metal solid solution or a metal carbide compound is formed, and thus that the mass of the porous material has increased.

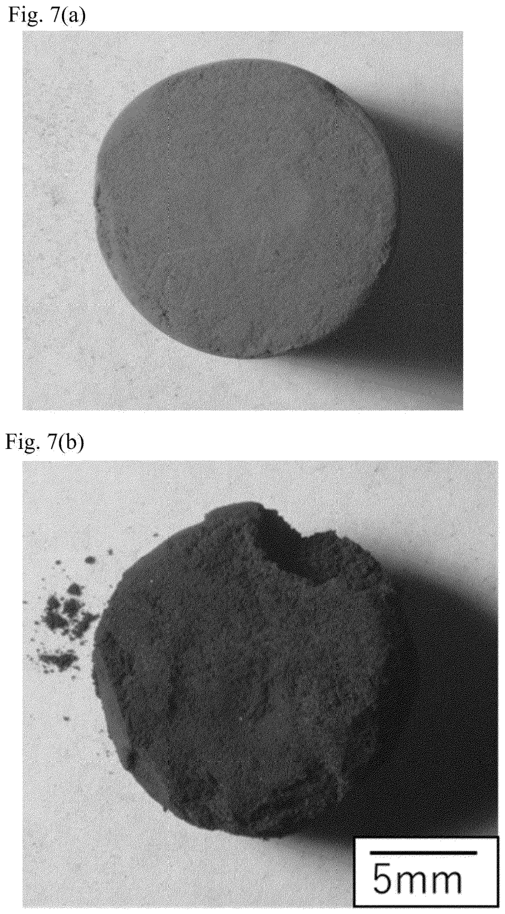

Figs. 7 are photographs of the state of iron whiskers. Fig. 7(a) shows the state of iron whiskers formed in tablet form before a carbon-containing gas was passed therethrough, and Fig. 7(b) shows the state of iron whiskers formed in tablet form after the carbon-containing gas was passed therethrough. As is obvious from Figs. 7, the configuration of the iron whiskers formed in tablet form before the carbon-containing gas was passed therethrough could not be maintained after the carbon-containing gas was passed therethrough. Further, qualitative analysis of the iron whiskers was conducted after the carbon-containing gas had been passed therethrough. Consequently, the surfaces of the iron whiskers were covered with solid-state carbon separated from carbon monoxide after the carbon-containing gas had been passed therethrough.

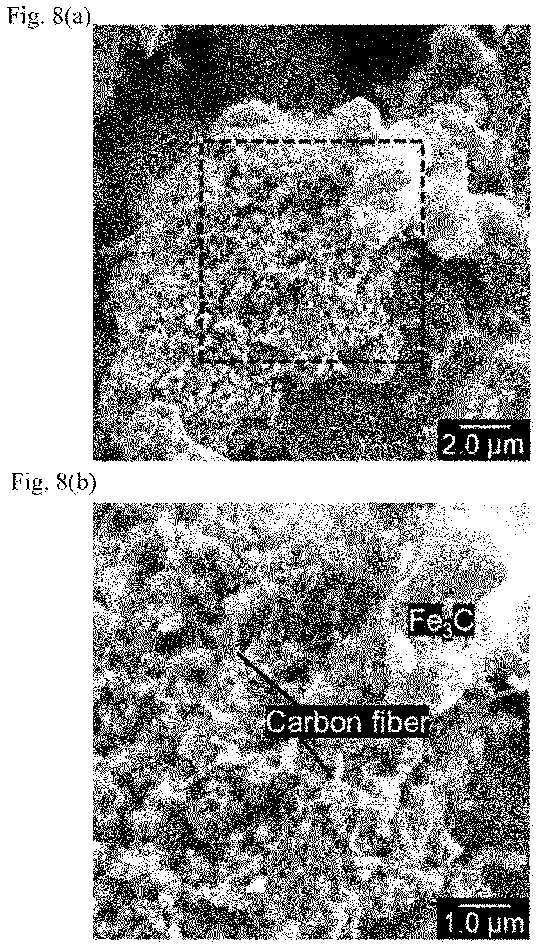

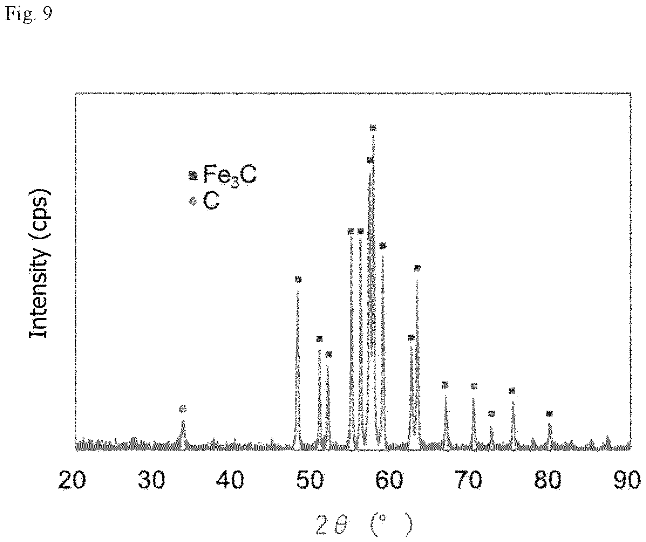

Fig. 8(a) is an enlarged photograph of the state of the iron whisker taken with a scanning electron microscope (SEM) after the carbon-containing gas was passed therethrough. Fig. 8(b) is an enlarged photograph of a portion surrounded by a broken line indicated in Fig. 8(a). Fig. 9 shows an XRD profile of the iron whiskers after the carbon-containing gas was passed therethrough. According to Figs. 8 and 9, it has been clarified that as the carbon-containing gas was passed through the iron whiskers, the resulting iron whiskers contained solid-state carbon separated from carbon monoxide contained in the carbon-containing gas through a decomposition reaction of the carbon monoxide and thus precipitated on the surfaces of the iron whiskers, and also contained cementite (i.e., iron carbide) formed through the carburization of the iron whiskers with the carbon.

As described above, by using the method for recovering carbon from a carbon-containing gas according to the present invention, it is possible to recover carbon separated from carbon monoxide contained in a carbon-containing gas derived from a source gas, such as an exhaust gas, by a decomposition reaction of the carbon monoxide. Further, by using the method for recovering carbon from a carbon-containing gas according to the present invention, it is possible to recover as the separated carbon a carbon solid solution or a metal carbide compound formed by the carburization of the porous material and further by a reaction between the carbon and the porous material.

Industrial Applicability

The method for recovering carbon from a carbon-containing gas according to the present invention uses a gas obtained by reforming carbon dioxide contained in a source gas, such as an exhaust gas, into carbon monoxide, thereby allowing carbon to be recovered from the carbon dioxide contained in the source gas, such as the exhaust gas. Thus, the present invention is industrially quite advantageous in, for example, the steel industry in which carbon dioxide is discharged, energy-related industries, such as coal-fired power generation, the chemical industry, the pulp and papermaking industry, and the food processing industry.

Reference Signs List

100    carbon separating unit
101    reaction tower
101a   sample holder
102    porous material (iron whisker)
103    buffer layer (aluminum ball)
104    supply pipe (for carbon-containing gas)
105    exhaust gas pipe

**Claims**

1. A method for recovering carbon from a carbon-containing gas, comprising:

    a step of bringing a carbon-containing gas containing carbon monoxide into contact with a porous material to cause carbon to be separated from the carbon monoxide; and
    a step of recovering the carbon,
    **characterized in that**:
    water and hydrogen contained in the carbon-containing gas satisfy the following Expression (1):

$$[H_2O] / ([H_2O] + [H_2]) < 0.1 \cdots \qquad (1)$$

    , where $[H_2O]$ represents a water concentration (volume%) in a reformed mixed gas, and $[H_2]$ represents a hydrogen concentration (volume%) in the reformed mixed gas.

2. The method for recovering carbon from a carbon-containing gas according to claim 1, wherein the carbon-containing gas is brought into contact with the porous material under an atmosphere at 500 to 800°C.

3. The method for recovering carbon from a carbon-containing gas according to claim 1 or 2, wherein the carbon-containing gas is brought into contact with the porous material under an atmosphere at 1.0 to 10 atm.

4. The method for recovering carbon from a carbon-containing gas according to any one of claims 1 to 3, wherein

an open porosity, as measured by the Archimedes method, of the porous material is 50 to 99%.

5. The method for recovering carbon from a carbon-containing gas according to any one of claims 1 to 4, wherein the porous material contains at least one element selected from the group consisting of iron, platinum, nickel, cobalt, rhodium, and palladium.

6. The method for recovering carbon from a carbon-containing gas according to any one of claims 1 to 4, wherein the porous material contains one or two types of iron selected from the group consisting of iron oxide and reduced iron.

7. The method for recovering carbon from a carbon-containing gas according to any one of claims 1 to 6, wherein the carbon-containing gas contains carbon monoxide produced by a reforming reaction of a source gas containing carbon dioxide in which a mixed gas obtained by supplying a hydrogen gas to the source gas is heated to 800 to 1200°C.

8. The method for recovering carbon from a carbon-containing gas according to claim 7, wherein the mixed gas contains a part of or an entirety of an off-gas resulting from the contact between the carbon-containing gas and the porous material.

9. The method for recovering carbon from a carbon-containing gas according to claim 7 or 8, wherein the hydrogen gas is supplied so that a hydrogen concentration in the mixed gas becomes 58 volume% or more.

10. The method for recovering carbon from a carbon-containing gas according to any one of claims 7 to 9, further comprising removing water contained in the source gas and water produced by the reforming reaction of the source gas.

11. An apparatus for recovering carbon from a carbon-containing gas, comprising:

a carbon separating unit that brings a carbon-containing gas containing carbon monoxide into contact with a porous material to allow carbon to be separated from the carbon monoxide; and
a carbon recovery unit that recovers the carbon.

Fig. 1

Carbon-containing Gas

CO

Carbon Separating Unit
(Porous Material-Filled Layer at 500 to 800 °C)

$$2\,CO \rightarrow C + CO_2$$

$$CO + H_2 \rightarrow C + H_2O$$

Carbon Recovery Unit

Separated Carbon

Carbon-Metal Solid Solution/Carbon-Metal Compound

Fig. 2(a)

Fig. 2(b)

Fig. 3

Dehumidified Gas

Water Removal Unit
(e.g., Adsorbent)
$H_2O$ (g) → $H_2O$ (l)

$CO_2$, CO, $H_2$

Reformed Gas    $CO_2$, CO, $H_2$, $H_2O$

Hydrogen
Gas

Carbon Separating Unit
(Porous Material-Filled Layer at 500 to 800°C)
$2CO \rightarrow C + CO_2$
$CO + H_2 \rightarrow C + H_2O$

Off Gas

$CO_2$, $H_2O$

Gas Reforming Unit (800 to 1200°C)
$CO_2 + H_2 \rightarrow CO + H_2O$ (Water-Gas Shift Reaction)

$H_2$

Hydrogen Supply
Unit
$H_2$

Exhaust Gas Containing $CO_2$, CO, $H_2$, $H_2O$, etc

Carbon Recovery Unit
Separated Carbon
Carbon-Metal Solid Solution/ Carbon-Metal Compound

Source Gas Storage Unit
$CO_2$, CO, $H_2$, $H_2O$  (e.g.,Exhaust Gas)

Fig. 4

**Composition of Gas Reformed at 800°C and Dehydrated**

Proportion of $H_2$ Added to Exhaust Gas

Fig. 5

Fig. 6

Mass Increase Rate (ΔW) of Porous Material

Fig. 7(a)

Fig. 7(b)

5mm

Fig. 8(a)

Fig. 8(b)

Fig. 9

## INTERNATIONAL SEARCH REPORT

International application No.

**PCT/JP2023/007386**

### A. CLASSIFICATION OF SUBJECT MATTER

***C01B 32/05***(2017.01)i; ***C01B 32/40***(2017.01)i; ***B01J 23/745***(2006.01)i
FI:  C01B32/05; C01B32/40; B01J23/745 A

According to International Patent Classification (IPC) or to both national classification and IPC

### B. FIELDS SEARCHED

Minimum documentation searched (classification system followed by classification symbols)

C01B32/00-32/991; B01J23/745

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-516361 A (SEERSTONE LLC) 11 June 2015 (2015-06-11) <br> claims, paragraphs [0087]-[0089], [0096]-[0102] | 1-11 |
| A | JP 2015-514669 A (SEERSTONE LLC) 21 May 2015 (2015-05-21) <br> entire text | 1-11 |
| A | JP 2018-104282 A (SEERSTONE LLC) 05 July 2018 (2018-07-05) <br> entire text | 1-11 |
| A | JP 2002-284513 A (SHIMADZU CORP) 03 October 2002 (2002-10-03) <br> entire text | 1-11 |
| A | JP 2014-109474 A (CENTRAL RESEARCH INSTITUTE OF ELECTRIC POWER INDUSTRY) 12 June 2014 (2014-06-12) <br> entire text | 1-11 |
| A | JP 2012-524015 A (SEERSTONE LLC) 11 October 2012 (2012-10-11) <br> entire text | 1-11 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2023** | **16 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/007386**

| Patent document cited in search report | | | Publication date (day/month/year) | Patent family member(s) | | | Publication date (day/month/year) |
|---|---|---|---|---|---|---|---|
| JP | 2015-516361 | A | 11 June 2015 | US claims, paragraphs [0087]-[0089], [0096]-[0102] EP claims, paragraphs [0087]-[0089], [0096]-[0102] CN | 2015/0059527 002838844 104284861 | A1 A1 A | |
| JP | 2015-514669 | A | 21 May 2015 | US entire text EP entire text CN | 2015/0071846 002838839 104302575 | A1 A1 A | |
| JP | 2018-104282 | A | 05 July 2018 | US entire text EP entire text CN | 2015/0071846 002838839 104302575 | A1 A1 A | |
| JP | 2002-284513 | A | 03 October 2002 | (Family: none) | | | |
| JP | 2014-109474 | A | 12 June 2014 | (Family: none) | | | |
| JP | 2012-524015 | A | 11 October 2012 | US entire text EP entire text CN KR | 2012/0034150 002419553 102459727 10-2012-0094416 | A1 A1 A A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020013135 A

- WO 2018179351 A

**Non-patent literature cited in the description**

- Development of Manufacturing Principle of Porous Iron by Carbothermic Reduction of Composite of Hematite and Biomass Char. *Materials Transactions*, 2017, vol. 58 (12), 1742-1748